# EUROPÄISCHE PATENTSCHRIFT

(11) **EP 1 180 472 B1**
(45) Veröffentlichungstag und Bekanntmachung des Hinweises auf die Patenterteilung: **22.09.2004**
(21) Anmeldenummer: 01116375.5
(22) Anmeldetag: 06.07.2001
(51) Int. Cl.: B62D 43/04

(54) **Kraftfahrzeug mit Seilwinde zum Anheben und Absenken des Reserverades**
Motor vehicle with a winch for lifting and lowering the spare tire
Véhicule automobile avec un treuil pour soulever et descendre la roue de secours

(30) Priorität: 10.08.2000 DE 20013754 U
(43) Veröffentlichungstag der Anmeldung: 20.02.2002
(73) Patentinhaber: Gebr. Dingerkus GmbH & Co. KG, 57439 Attendorn (DE)
(72) Erfinder: Muth, Joachim, 58840 Plettenberg (DE)
(74) Vertreter: Köchling, Conrad-Joachim, Dipl.-Ing.

(56) Entgegenhaltungen:
- DE-C- 19 841 281
- US-A- 4 600 352
- US-A- 5 100 106
- US-A- 5 368 280
- US-A- 6 092 790

## Beschreibung

Die Erfindung betrifft Kraftfahrzeug mit einem Bodenteil, einer unterhalb des Bodenteils angeordneten Halterung für ein Reserverad, einer Seilwinde zum Anheben und Absenken des Reserverades sowie einer Sicherungsvorrichtung zur Sicherung des Reserverades in der angehobenen Lage, wobei die Halterung und die Sicherungsvorrichtung des Reserverades an einer zentralen Stelle des Bodenteils befestigt sind, wobei ein Gehäuse mit Seilwinde und mit Antriebsteilen der Seilwinde und mit Betätigungsteilen für die Sicherungsvorrichtung an einer dezentralen Stelle befestigt ist, wobei ein Betätigungszug der Sicherungsvorrichtung zwischen dem Gehäuse und der Halterung angeordnet ist und wobei ein erstes Führungsrohr, das vom Seil der Seilwinde durchgriffen ist, eine Verbindung zwischen der Halterung und dem Gehäuse bildet.

Im Stand der Technik sind vielfältige Einrichtungen an Kraftfahrzeugen bekannt, mittels derer ein beispielsweise unterhalb des Kofferraums oder Laderaums am rückwärtigen Ende des Fahrzeugs anzuordnendes Reserverad gehaltert werden kann.

Grundsätzlich dient diese Anordnung dazu, das Reserverad außerhalb des Fahrzeuges, unterhalb des Ladebodens oder Kofferraumbodens anzuordnen, um das Stauvolumen des Laderaums oder des Kofferraums nicht durch das Reserverad zu mindern.

Bei dieser Anordnung muß einerseits sichergestellt sein, daß das Reserverad im Normalzustand fest und sicher unterhalb des Ladebodens oder dergleichen angeordnet und gehaltert ist. Andererseits muß es für den Benutzer in relativ einfacher Weise möglich sein, das Reserverad aus der Halterung lösen zu können und entnehmen zu können.

Aus der gattungsbildenden US 6 092 790 A ist es bekannt, im Bereich der Anordnung des Reserverades eine Seilwinde mit einem entsprechenden Ankerteil anzuordnen, so daß mittels der Seilwinde, die vom Innenraum des Fahrzeuges, also von der Innenseite des Ladebodens oder Kofferraum her betätigbar ist, das Reserverad aus der angehobenen Ruhelage in die abgesenkte Gebrauchslage zum Zwecke der Entnahme zu überführen. Zusätzlich ist es dabei bekannt, eine Sicherungsvorrichtung in Kombination mit der Seilwinde vorzusehen, um sicherzustellen, daß das Reserverad in der Befestigungssollage sich nicht unbeabsichtigt durch Lockerung oder Lösen der Seilwinde in die abgesenkte Stellung bewegen kann, was zu Unfallgefahren führen könnte.

Ein Problem, was bei dieser Anordnung besteht, ist, daß die Betätigung der Seilwinde und der Sicherungsvorrichtung auch dann möglich sein soll, wenn der Laderaum oder der Kofferraum vollständig oder weitgehend mit Ladegut gefüllt ist. Ein weiteres Problem besteht darin, die Seilwinde und die Sicherungsvorrichtung in einfacher Weise montieren zu können. Dies ist im Stand der Technik häufig äußerst schwierig, weil unterhalb des Ladebodens oder Kofferraumbodens Längstraversen oder dergleichen des Fahrgestells angeordnet sind. Dies bedeutet, daß zwar eine zentrale Anordnung der Seilwinde und der Sicherungsvorrichtung beispielsweise mittig zwischen Längstraversen, die unterhalb des Ladebodens verlaufen, vorgesehen werden kann, jedoch ist die dezentrale Anordnung der Betätigungseinrichtung für die Seilwinde und die Sicherungsvorrichtung äußerst schwierig, da die entsprechende Betätigungseinrichtung beispielsweise in einem randnahen Bereich an der hinteren Randkante des Fahrzeugbodens oder dergleichen anzuordnen ist, die vorzugsweise auch innerhalb der Flucht eines Radkastens des Fahrzeuges liegt. Bei dieser Anordnung kreuzen die mit der Seilwinde und der Sicherungsvorrichtung verbundenen Seilzüge und dergleichen die Traversenanordnung, so daß die Montage äußerst schwierig und aufwendig ist.

Ausgehend von diesem Stand der Technik die Aufgabe zugrunde, ein Kraftfahrzeug gattungsgemäßer Art zu schaffen, bei dem die herstellerseitige Montage der Seilwinde, der Sicherungsvorrichtung und der zugehörigen Betätigungsvorrichtung in einfacher Weise möglich ist, und zwar insbesondere nach der Fertigstellung des entsprechenden Kraftfahrzeugchassis.

Zur Lösung dieser Aufgabe wird vorgeschlagen, dass das Bodenteil eine erste Ausnehmung aufweist, in die die Halterung und die Sicherungsvorrichtung von der dem Reserverad abgewandten Seite der eingesetzt sind, das Bodenteil eine zweite Ausnehmung aufweist, in die das Gehäuse von der dem Reserverad abgewandten Seite her eingesetzt ist,
ein zweites Führungsrohr, das vom Betätigungszug der Sicherungsvorrichtung durchgriffen ist, eine Verbindung zwischen der Halterung und dem Gehäuse bildet, und die Führungsrohre oberseitig auf dem Bodenteil angeordnet sind.

Diese Ausbildung ermöglicht eine äußerst einfache Herstellung und Montage der Einrichtung. Um die Sicherungsvorrichtung und auch die Seilwinde sowie deren Betätigungselemente in einfacher Weise anordnen zu können, ist es lediglich erforderlich, das Bodenteil mit der ersten und zweiten Ausnehmung zu versehen. Die erste Ausnehmung ist beispielsweise mittig zwischen den unterseitig des Bodenteils angeordneten Längsträgern angeordnet, wobei der Platz zwischen den Längsträgern ausreicht, um das entsprechende Reserverad dort unterbringen zu können. Die zweite Ausnehmung ist nahe der Zugangsöffnung, beispielsweise nahe der Heckklappe eines Fahrzeuges angeordnet, und zwar nicht mittig im Bereich des Schlosses oder dergleichen, sondern außermittig, insbesondere in der Fluchtlinie eines Radkastens. Hierdurch wird erreicht, daß bei dem fertig gestellten Fahrzeug der Bereich dieser zweiten Ausnehmung nicht von Ladegut oder dergleichen abgedeckt ist, weil das Ladegut, beispielsweise Ladepaletten oder dergleichen ohnehin nicht im Bereich der Fluchtlinie des Radkastens oder dergleichen angeordnet sein können.

Diese Anordnung der Ausnehmungen ermöglicht es erfindungsgemäß in die erste Ausnehmung von der Oberseite des Bodenteils her, die Halterung des Reserverades einzusetzen und zu fixieren. Desweiteren ist es möglich, in die zweite Ausnehmung ebenfalls von der Oberseite des Bodens her das Gehäuse mit Seilwinde, Antriebsteilen und Betätigungsteilen für die Sicherungsvorrichtung einzusetzen. Die Montage dieser Elemente kann in einfacher Weise nach Fertigstellung des Chassis erfolgen, und zwar von der Oberseite des Bodens her, wobei unterhalb des Bodens befindliche Elemente wie Traversen oder dergleichen nicht bei der Montage stören. Um das Seil der Seilwinde, welches von dem in die zweite Ausnehmung eingesetzten Gehäuseteil zu dem in die erste Ausnehmung eingesetzten Halterungselement verläuft und um den parallel dazu verlaufenden Betätigungszug der Sicherungsvorrichtung anordnen zu können, sind oberseitig auf das Bodenteil Führungsrohre oder dergleichen aufgelegt und an dem Bodenteil gegebenenfalls fixiert, durch welche das Seil und der Betätigungszug geführt ist. Diese Führungsrohre oder dergleichen können in eine Einprägung des Bodenteils eingesetzt sein, so daß sie nicht über die Oberseite des Bodenteils vorragen oder aber das Bodenteil kann, wie üblich, mit Sicken oder dergleichen versehen sein, wobei die entsprechenden Sicken im Verlauf der Führungsrohre oder dergleichen eingedrückt sind, so daß die Führungsrohre oder dergleichen unterhalb der Fluchtlinie der Oberkante der Sicken zu verlegen sind. Auf diese Weise ist nicht nur die einfache Montage dieser Elemente von der Oberseite des Bodens her sichergestellt, sondern es ist darüber hinaus sichergestellt, daß bei der bestimmungsgemäßen Benutzung, insbesondere beim Beladen des Fahrzeuges die auf das Bodenteil aufgestellten Ladegüter die entsprechenden Einrichtungen nicht beschädigen können.

Durch die angegebene Anordnung und Ausbildung ist eine kostengünstige Fertigung erreicht, da bei der Herstellung des Fahrzeugbodens lediglich zusätzliche Ausnehmungen vorzusehen sind, die problemlos bei der Fertigung des Bodens eingebracht werden können. Die Bestandteile der Halterungs- und Sicherungseinrichtung können einfache relativ kleindimensionierte Bauteile sein, die die in die entsprechenden Ausnehmungen einsetzbar und in diesen befestigbar sind, wobei die Befestigung und Anordnung ausschließlich von der Oberseite des Bodens her erfolgt.

Wie schon oben angedeutet, ist vorzugsweise vorgesehen, daß das Bodenteil eine rinnenähnliche Aufnahmekontur aufweist, die sich zwischen den Ausnehmungen erstreckt und in die Führungsrohre oder dergleichen eingelegt sind.

Eine bevorzugte Weiterbildung wird darin gesehen, daß die Halterung eine Flanschplatte aufweist, die die erste Ausnehmung überdeckt und am Bodenteil fixiert ist, wobei von der Flanschplatte unterseitig, die Ausnehmung durchgreifend ein Stützprofil abragt, an dem ein Verriegelungshebel angelenkt ist, an dessen oberem Ende der Betätigungszug der Sicherungsvorrichtung angreift und dessen anderes Ende als Haken ausgebildet ist, wobei das Stützprofil in Längsrichtung vom Seil durchgriffen ist, an dessen Ende eine Halteplatte für das Reserverad und eine Haltestange mit mindestens einem Verriegelungsvorsprung fixiert ist, wobei der Haken des Verriegelungshebels bei angehobenem Reserverad hinter den Verriegelungsvorsprung oder einen der Verriegelungsvorsprünge greift, wobei insbesondere der Haken mittels einer Feder in die Verriegelungslage gedrängt ist.

Die Flanschplatte kann mit einer unterseitigen Dichtung ausgebildet sein, so daß die Flanschplatte die entsprechende Einbauöffnung in der Bodenplatte abdeckt und dichtend verschließt. Unterseitig von der Flanschplatte ragen die entsprechenden Funktionselemente ab, die relativ unkompliziert ausgebildet sind.

Desweiteren ist bevorzugt vorgesehen, daß das Gehäuse aus einem in die zweite Ausnehmung einsetzbaren schalenartigen Teil mit Flanschrand besteht, in das eine Seilscheibe eingelegt ist auf die das Seil aufwickelbar ist, wobei die Seilscheibe einen Zahnkranz aufweist, der mit einem Ritzel eines Ratschenantriebes in Eingriff steht, der in das Gehäuse eingelegt ist und einen Umsteller für die Drehrichtung des Ritzels aufweist, wobei vom Ratschenantrieb ein polygonaler Antriebsbolzen abragt, wobei ferner im Gehäuse unterhalb des Ratschenantriebes ein Hebel gelagert ist, an dessen eines Ende der Betätigungszug der Sicherungsvorrichtung angreift und dessen anderes Ende mit einem Zughebel gekoppelt ist, der von der Oberseite des Gehäuses zugänglich ist beziehungsweise über diese vorragt.

Dabei ist bevorzugt vorgesehen, daß der Zughebel an einer Linearführung des Gehäuses längsverschieblich geführt ist.

Ein Ausführungsbeispiel der Erfindung ist in der Zeichnung dargestellt und nachfolgend näher beschrieben.

Es zeigt:
- Figur 1a und 1b: die wesentlichen Teile der erfindungsgemäßen Ausbildung in Draufsicht gesehen;
- Figur 2a und 2b: die wesentlichen Elemente der Erfindung in Seitenansicht.

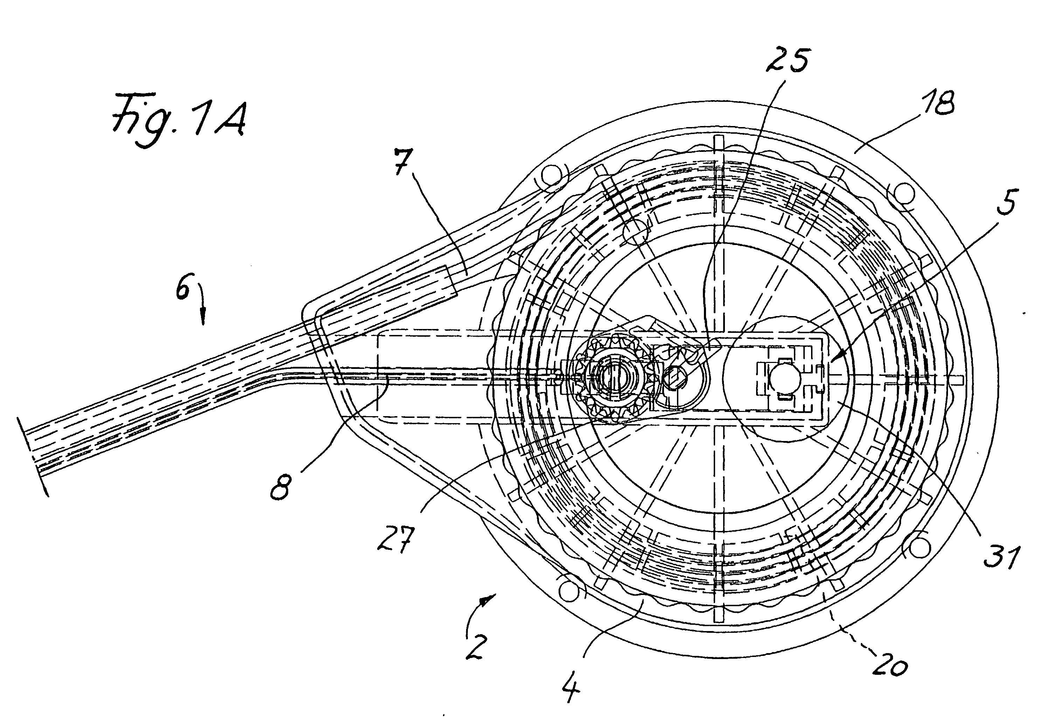

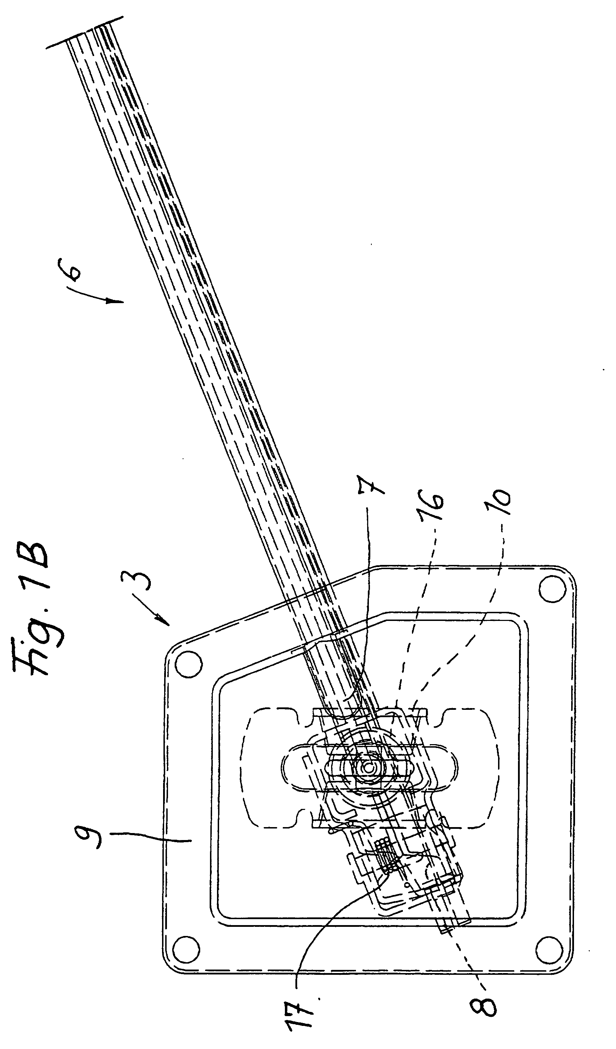

Bei der Ausführungsform nach Figur 1a und 1b bildet die Zeichnungsebene praktisch das Bodenteil eines Kraftfahrzeuges. In der Einbausituation ist eine unterhalb des Bodenteils angeordnete Halterung 1 für ein Reserverad vorgesehen. Ferner ist eine Seilwinde 2 zum Absenken und Anheben des Reserverades vorgesehen, sowie eine Sicherungsvorrichtung 3 zur Sicherung des Reserverades in der angehobenen Lage.

Gemäß der Erfindung ist das Bodenteil an einer zentralen Stelle, die beispielsweise mittig zwischen zwei Längsträgern angeordnet ist und mit ausreichendem Abstand von der hinteren Randkante des Fahrzeuges angeordnet ist, eine erste Ausnehmung vorgesehen, in die die Halterung 1 und Sicherungsvorrichtung 3 des Reserverades von der Oberseite des Bodens her eingesetzt und befestigt ist. An dezentraler Stelle, beispielsweise im rechten oder linken hinteren Randbereich des Bodens, der innerhalb der Fluchtlinie eines Radkastens liegt, ist eine weitere Ausnehmung vorgesehen, in die ein Gehäuse 4 mit Seilwinde 2 und Antriebsteilen der Seilwinde sowie mit Betätigungsteilen 5 für die Sicherungsvorrichtung 3 von der Oberseite des Bodens her eingesetzt und befestigt ist. Zur funktionellen Verbindung der beiden Elemente ist die Anordnung von Führungsrohren 6 oberseitig auf dem Bodenteil vorgesehen, wobei die Führungsrohre am Bodenteil vorzugsweise lagegesichert gehaltert sind. Die Führungsrohre 6 oder dergleichen sind vom Seil 7 der Seilwinde 2 und von einem Betätigungszug 8 der Sicherungsvorrichtung 3 durchgriffen, so daß eine funktionelle Verbindung zwischen den Elementen 1 und 3 und den Elementen 2 und 5 gebildet ist.

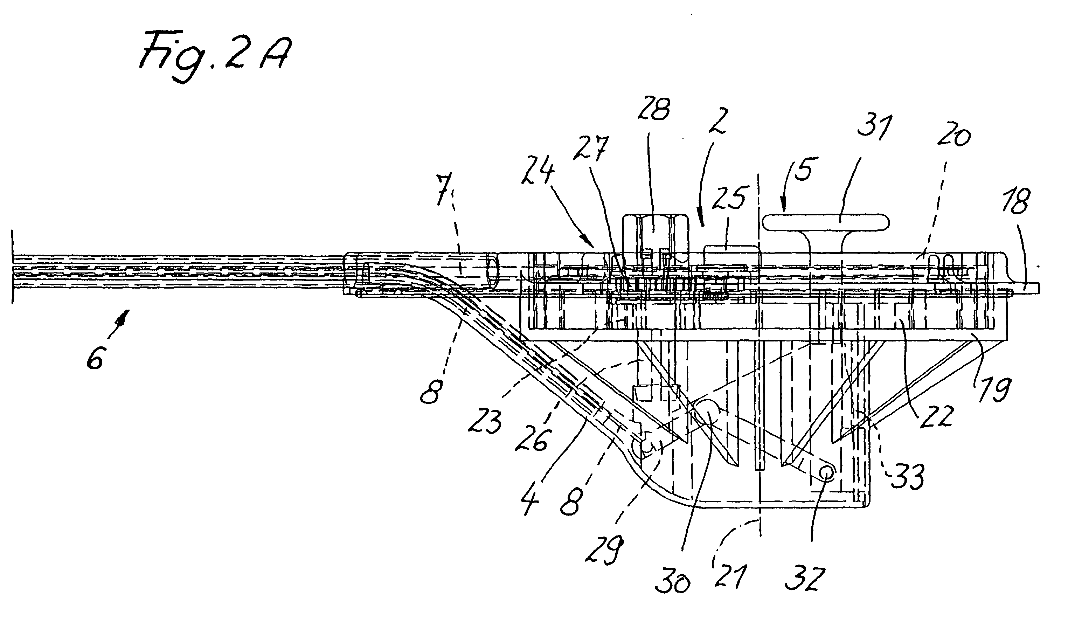

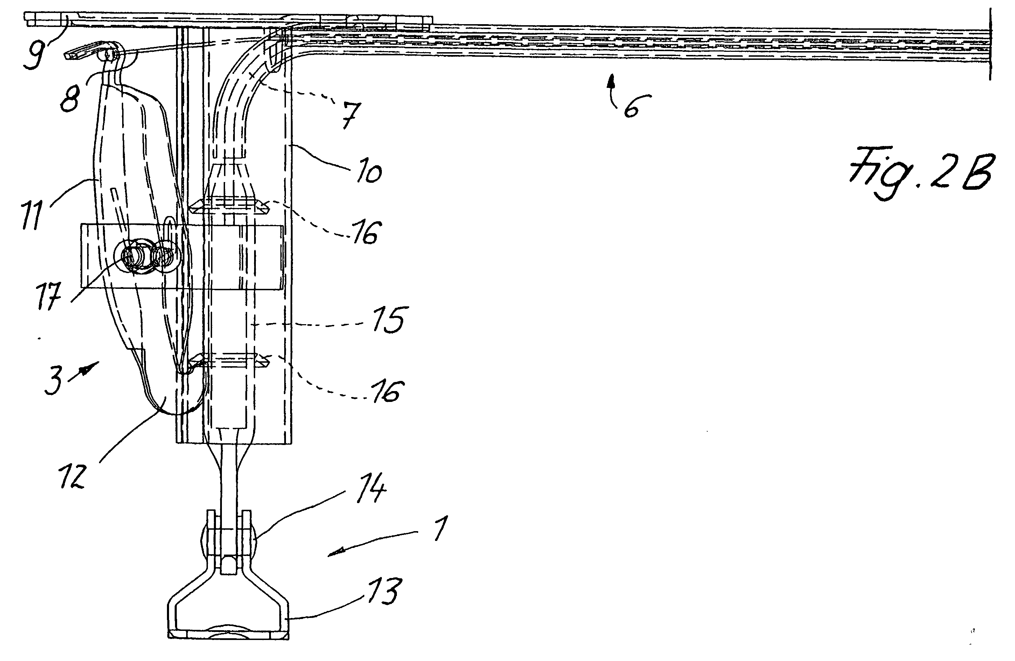

Die Elemente können auch durch die Rohre 6 zu einer montagefähigen Einheit zusammengehalten sein. Die Halterung 7 weist eine Flanschplatte 9 auf, die unterseitig eine Dichtung aufweist und die die erste Ausnehmung des Bodenteils überdeckt und am Bodenteil beispielsweise mittels Schrauben fixiert ist. Von der Flanschplatte 9 ragt unterseitig, die entsprechende Ausnehmung des Bodenteils durchgreifend, ein Stützprofil 10 ab, an dem ein zweiarmiger Verriegelungshebel 11 angelenkt ist, an dessen oberen Ende in Figur 2b der Betätigungszug 8 der Sicherungsvorrichtung angreift und dessen anderes Ende 12 als Haken ausgebildet ist. Das Stützprofil ist in Längsrichtung von dem Seil 7 durchgriffen, an dessen in Zeichnungsfigur 2b unterem Ende eine Halteplatte 13 für das Reserverad um einen Gelenkbolzen 14 drehbar gehaltert ist, wobei zwischen dem Element 14 und dem Anschluß des Seiles 7 eine Haltestange 15 mit zwei Verriegelungsvorsprüngen 16 fixiert ist. Der Haken (bei 12) des Verriegelungshebels 11 ist bei angehobenem Reserverad hinter dem in Zeichnungsfigur 2b unteren Verriegelungsvorsprung 16 verriegelt, wobei der zweite Verriegelungsvorsprung 16 eine Hilfsarretierung ist, für den Fall, daß die Verriegelung am unteren Verriegelungsvorsprung 16 nicht greift. Die Verriegelungsvorsprünge 16 sind beispielsweise als umlaufende nach unten gewölbte Kragen ausgebildet. Der Haken 11 ist mittels einer Feder 17 zwangsläufig in Verriegelungslage gedrängt.

Das Gehäuse 4 besteht aus einem in die zweite Ausnehmung einsetzbaren schalenartigen Teil mit Flanschrand 18, der wiederum unter Zwischenlage einer Dichtung an das Bodenteil angezogen und mittels Schrauben fixiert werden kann. In dem Gehäuse 4 liegt in einer flachen Ausnehmung 19 eine Seilscheibe 20, die um die Achse 21 drehbar ist. Auf diese Seilscheibe 20 ist das Seil 7 aufwickelbar beziehungsweise von dieser ist das Seil 7 abwickelbar. Die Seilscheibe 20 weist einen bei 22 angedeutetem Zahnkranz auf, der mit einem Ritzel 23 eines Ratschenantriebes 24 in Eingriff steht, der in das Gehäuse 4, insbesondere in den Bereich 19 des Gehäuses 4 eingelegt ist und einen Umsteller 25 für die Drehrichtung des Ritzels 23 aufweist. Hierzu ist an dem drehbaren Element 26, welches drehfest mit dem Ritzel 23 verbunden ist, ein Zahnrad 27 des Ratschenantriebes angeordnet, welches mit einem alternativ die Drehrichtung des Zahnrades sperrenden Umsteller 25 gekoppelt ist. Der Umsteller ist von der Oberseite her zugänglich und manipulierbar, so daß für den Benutzer die eine beziehungsweise andere Drehrichtung einstellbar ist. Drehfest mit dem Ratschenantrieb verbunden ist ein polygonaler Antriebsbolzen 28, der beispielsweise mittels eines Steckschlüssels, insbesondere mit einem Radmutternschlüssel vom Benutzer betätigbar ist. Ferner ist in dem Gehäuse unterhalb des Gehäuseteils 19 ein zweiarmiger Hebel 29, um das Gelenk 30 schwenkbar angeordnet, an dessen eines Ende der Betätigungszug 8 angeschlossen ist und dessen anderes Ende mit einem Zughebel 31 gekoppelt ist (bei 32), der von der Oberseite des Gehäuses 4 her zugänglich ist. Der Zughebel 31 ist an einer Linearführung 33 des Gehäuses längsverschieblich geführt.

In den Figuren ist die Verriegelungslage der Elemente gezeigt. In dieser Position ist auf dem Element 13 das entsprechende Reserverad mit seiner Felge gehaltert, wobei das Element 13 die Mittellochung des Reserverades durchgreift. Sofern das Reserverad entnommen werden soll, kann der Benutzer durch Zug an dem Zughebel 31 die Verriegelung des Hebels 11 mit dem Teil 16 lösen und anschließend durch Drehen des Antriebsbolzens 28 den Seilzug 7 von der Seilscheibe abrollen, so daß sich das Element 13 in der Zeichnungsfigur 2b nach unten bewegt. Die Länge des Seiles 7 ist so bemessen, daß das Reserverad nicht nur auf den Unterboden, auf dem das Fahrzeug aufsteht, abgelegt werden kann, sondern noch außerhalb der Fluchtlinie des Fahrzeuges herausgezogen werden kann, so daß der Benutzer das Element 13 lösen und das Reserverad entnehmen kann, beziehungsweise erneut ein Reserverad an den Teil fixieren kann. Soll ein entsprechendes Reserverad aus der abgelegten Lage in die Hochlage verbracht werden, so wird das Gesperre über Betätigung des Elements 25 und die alternative mögliche Drehposition verstellt und durch Drehung des Antriebsbolzens 18 in die entsprechend andere Richtung das Seil 7 auf die Seilrolle aufgewickelt und das Element 13 angehoben. Dabei überlaufen die Verriegelungsvorsprünge 16 den Haken 12 der Sicherungseinrichtung 3, bis die Position gemäß Figur 2b erreicht ist.

Die Erfindung ist nicht auf das Ausführungsbeispiel beschränkt, sondern im Rahmen der Offenbarung vielfach variabel.

## Patentansprüche

1. Kraftfahrzeug mit einem Bodenteil, einer unterhalb des Bodenteils angeordneten Halterung (1) für ein Reserverad, einer Seilwinde (2) zum Anheben und Absenken des Reserverades (3) sowie einer Sicherungsvorrichtung zur Sicherung des Reserverades in der angehobenen Lage, wobei die Halterung (1) und die Sicherungsvorrichtung (3) des Reserverades an einer zentralen Stelle des Bodenteils befestigt sind, wobei ein Gehäuse (4) mit Seilwinde (2) und mit Antriebsteilen der Seilwinde (2) und mit Betätigungsteilen (5) für die Sicherungsvorrichtung (3) an einer dezentralen Stelle befestigt ist, wobei ein Betätigungszug (8) der Sicherungsvorrichtung (3) zwischen dem Gehäuse (4) und der Halterung (1) angeordnet ist und wobei ein erstes Führungsrohr (6), das vom Seil (7) der Seilwinde (2) durchgriffen ist, eine Verbindung zwischen der Halterung (1) und dem Gehäuse (4) bildet, **dadurch gekennzeichnet, dass**
- das Bodenteil eine erste Ausnehmung aufweist, in die die Halterung (1) und die Sicherungsvorrichtung (3) von der dem Reserverad abgewandten Seite her eingesetzt sind,
- das Bodenteil eine zweite Ausnehmung aufweist, in die das Gehäuse (4) von der dem Reserverad abgewandten Seite her eingesetzt ist,
- ein zweites Führungsrohr (6), das vom Betätigungszug (8) der Sicherungsvorrichtung (3) durchgriffen ist, eine Verbindung zwischen der Halterung (1) und dem Gehäuse (4) bildet, und
- die Führungsrohre (6) oberseitig auf dem Bodenteil angeordnet sind.

2. Kraftfahrzeug nach Anspruch 1,
**dadurch gekennzeichnet, daß** das Bodenteil eine rinnenähnliche Aufnahmekontur aufweist, die sich zwischen den Ausnehmungen erstreckt und in die die Führungsrohre (6) oder dergleichen eingelegt sind.

3. Kraftfahrzeug nach Anspruch 1 oder 2,
**dadurch gekennzeichnet, daß** die Halterung (1) eine Flanschplatte (9) aufweist, die die erste Ausnehmung überdeckt und am Bodenteil fixiert ist, wobei von der Flanschplatte (9) unterseitig, die Ausnehmung durchgreifend ein Stützprofil (10) abragt, an dem ein Verriegelungshebel (11) angelenkt ist, an dessen oberem Ende der Betätigungszug (8) der Sicherungsvorrichtung (3) angreift und dessen anderes Ende (12) als Haken ausgebildet ist, wobei das Stützprofil (10) in Längsrichtung vom Seil (7) durchgriffen ist, an dessen Ende eine Halteplatte (13) für das Reserverad und eine Haltestange (15) mit mindestens einem Verriegelungsvorsprung (16) fixiert ist, wobei der Haken des Verriegelungshebels (11) bei angehobenem Reserverad hinter den Verriegelungsvorsprung (16) oder einen der Verriegelungsvorsprünge greift, wobei insbesondere der Haken mittels einer Feder (17) in die Verriegelungslage gedrängt ist.

4. Kraftfahrzeug nach einem der Ansprüche 1 bis 3,
**dadurch gekennzeichnet, daß** das Gehäuse (4) aus einem in die zweite Ausnehmung einsetzbaren schalenartigen Teil mit Flanschrand (18) besteht, in das eine Seilscheibe (20) eingelegt ist auf die das Seil (7) aufwickelbar ist, wobei die Seilscheibe einen Zahnkranz (22) aufweist, der mit einem Ritzel (23) eines Ratschenantriebes (24) in Eingriff steht, der in das Gehäuse (4) eingelegt ist und einen Umsteller (25) für die Drehrichtung des Ritzels (23) aufweist, wobei vom Ratschenantrieb (24) ein polygonaler Antriebsbolzen (28) abragt, wobei ferner im Gehäuse (4) unterhalb des Ratschenantriebes (24) ein Hebel (29) gelagert ist, an dessen eines Ende der Betätigungszug (8) der Sicherungsvorrichtung (3) angreift und dessen anderes Ende mit einem Zughebel (31) gekoppelt ist, der von der Oberseite des Gehäuses (4) zugänglich ist beziehungsweise über diese vorragt.

5. Kraftfahrzeug nach Anspruch 4,
**dadurch gekennzeichnet, daß** die Zughebel (31) an einer Linearführung (33) des Gehäuses (4) längsverschieblich geführt ist.

## Claims

1. Motor vehicle comprising a floor part, a holder (1) for a spare wheel arranged below the floor part, a cable winch (2) for raising and lowering the spare wheel (3) and a securing device for securing the spare wheel in the raised position, wherein the holder (1) and the securing device (3) of the spare wheel are fastened to a central point of the floor part, wherein a housing (4) with cable winch (2) and with drive parts for the cable winch (2) and with operating parts (5) for the securing device (3) is fastened to a non-central point, wherein an actuating cord (8) of the securing device (3) is arranged between the housing (4) and the holder (1) and wherein a first guide tube (6), which is passed through by the cable (7) of the cable winch (2), forms a connection between the holder (1) and the housing (4), **characterized in that**
- the floor part has a first recess in which the holder (1) and the securing device (3) are inserted from the side facing away from the spare wheel,
- the floor part has a second recess in which the housing (4) is inserted from the side facing away from the spare wheel,
- a second guide tube (6), which is passed through by the actuating cord (8) of the securing device (3), forms a connection between the holder (1) and the housing (4), and
- the guide tubes (6) are arranged on the top of the floor part.

2. Motor vehicle according to Claim 1, **characterized in that** the floor part has a groove-like receiving contour which extends between the recesses and in which the guide tubes (6) or the like are placed.

3. Motor vehicle according to Claim 1 or 2, **characterized in that** the holder (1) has a flange plate (9) which covers the first recess and is fixed to the floor part, wherein a supporting profile (10) projects from the bottom of the flange plate (9) and passes through the recess, a locking lever (11) being articulated on said supporting profile, the actuating cord (8) of the securing device (3) acting on the upper end of said locking lever and the other end (12) of said locking lever being designed as a hook, wherein the supporting profile (10) is passed through in the longitudinal direction by the cable (7), at the end of which cable there is fixed a retaining plate (13) for the spare wheel and a retaining rod (15) comprising at least one locking protrusion (16), wherein the hook of the locking lever (11), when the spare wheel is raised, engages behind the locking protrusion (16) or one of the locking protrusions, the hook in particular being displaced into the locked position by means of a spring (17).

4. Motor vehicle according to any of Claims 1 to 3, **characterized in that** the housing (4) consists of a shell-like part which can be placed in the second recess and has a flange edge (18), into which there is placed a cable sheave (20) on which the cable (7) can be wound, wherein the cable sheave has a toothed rim (22) which is in engagement with a pinion (23) of a ratchet drive (24) which is placed in the housing (4) and has a change lever (25) for changing the direction of rotation of the pinion (23), wherein a polygonal drive bolt (28) projects from the ratchet drive (24), there furthermore being mounted in the housing (4), below the ratchet drive (24), a lever (29), one end of which is acted upon by the actuating cord (8) of the securing device (3) and the other end of which is coupled to a tension lever (31) which is accessible from the top side of the housing (4) and/or projects beyond the latter.

5. Motor vehicle according to Claim 4, **characterized in that** the tension lever (31) is guided in a longitudinally displaceable manner on a linear guide (33) of the housing (4).

## Revendications

1. Véhicule automobile doté d'un plancher, d'un dispositif de fixation (1) pour une roue de secours situe sous le plancher, d'un treuil à câble (2) pour lever et abaisser la roue de secours (3), ainsi que d'un dispositif de blocage pour bloquer la roue de secours en position levée, dans lequel le dispositif de fixation (1) et le dispositif de blocage (3) de la roue de secours sont fixés en un point central du plancher, un carter (4) abritant le treuil (2) et des pièces d'entraînement du treuil à câble (2), ainsi que des pièces d'actionnement (5) pour le dispositif de blocage (3) est fixé en un point excentré, un câble d'actionnement (8) du dispositif de blocage (3) étant placé entre le carter (4) et le dispositif de fixation (1), et un premier tube de guidage (6) traversé par le câble (7) du treuil (2) établissant une liaison entre le dispositif de fixation (1) et le carter (4), **caractérisé en ce que** le plancher présente un premier évidement dans lequel le dispositif de fixation (1) et le dispositif de blocage (3) sont logés depuis le côté opposé à la roue de secours, **en ce que** le plancher comporte un second évidement dans lequel le carter (4) est logé depuis le côté opposé à la roue de secours, **en ce qu'**un second tube de guidage (6) qui est traversé par le câble d'actionnement (8) du dispositif de blocage (3) constitue une liaison entre le dispositif de fixation (1) et le carter (4), et **en ce que** les tubes de guidage (6) reposent sur le dessus du plancher.

2. Véhicule automobile selon la revendication 1, **caractérisé en ce que** le plancher présente un logement semblable à une rigole qui s'étend entre les évidements et dans lequel sont posés les tubes de guidage (6) ou analogues.

3. Véhicule automobile selon la revendication 1 ou 2, **caractérisé en ce que** le dispositif de fixation (1) présente une plaque à bride (9) qui recouvre le premier évidement et qui est fixée au plancher, un profilé d'appui (10) faisant saillie du dessous de la plaque à bride (9) en traversant l'évidement, profilé auquel est fixé de manière articulée un levier de verrouillage (11) sur l'extrémité supérieure duquel agit le câble d'actionnement (8) du dispositif de blocage (3) et dont l'extrémité inférieure (12) est réalisée en forme de crochet, le profilé d'appui (10) étant traversé longitudinalement par le câble (7) à l'extrémité duquel est fixée une plaque de fixation (13) pour la roue de secours et une barre de fixation (15) dotée d'au moins une saillie de verrouillage (16), le crochet du levier de verrouillage (11) étant enclenché derrière la saillie de verrouillage (16) ou l'une des saillies de verrouillage lorsque la roue de secours est en position levée, le crochet étant notamment poussé en position de verrouillage par un ressort (17).

4. Véhicule automobile selon l'une des revendications 1 à 3, **caractérisé en ce que** le carter (4) est composé d'un élément semblable à une coque ou coquille dotée d'un bord à bride (18) et pouvant être placé dans le second évidement, dans lequel est posée une poulie (20) sur laquelle le câble (7) peut s'enrouler, la poulie du câble possédant une couronne dentée (22) qui engrène avec un pignon (23) d'un mécanisme à rochet (24) qui est logé dans le carter (4) et qui présente un inverseur (25) pour le sens de rotation du pignon (23), un axe d'entraînement polygonal (28) partant du mécanisme à rochet (24), sachant en outre que dans le carter (4), sous le mécanisme à rochet (24), est monté un levier (29) à l'une des extrémités duquel est relié le câble d'actionnement (8) du dispositif de blocage (3) et dont l'autre extrémité est accouplée à un levier de traction (31) qui est accessible par le dessus du carter (4) ou qui fait saillie de ce dernier.

5. Véhicule automobile selon la revendication 4, **caractérisé en ce que** le levier de traction (31) est guidé sur une glissière linéaire (33) du carter (4) de façon à être mobile le long de cette dernière.
